# EUROPÄISCHE PATENTSCHRIFT

(11) **EP 3 202 607 B1**
(45) Veröffentlichungstag und Bekanntmachung des Hinweises auf die Patenterteilung: **21.02.2024**
(21) Anmeldenummer: 16206051.1
(22) Anmeldetag: 22.12.2016
(51) Int. Cl.: B60K 6/48, B60K 6/40

(54) **ANTRIEBSEINRICHTUNG FÜR EIN KRAFTFAHRZEUG**
DRIVE DEVICE FOR A MOTOR VEHICLE
DISPOSITIF D'ENTRAÎNEMENT POUR UN VÉHICULE AUTOMOBILE

(30) Priorität: 03.02.2016 DE 102016001199
(43) Veröffentlichungstag der Anmeldung: 09.08.2017
(73) Patentinhaber: Audi AG, 85045 Ingolstadt (DE)
(72) Erfinder: Rothe, Albrecht, 85051 Ingolstadt (DE)

(56) Entgegenhaltungen:
- EP-A2- 2 886 383
- DE-A1- 19 941 705
- DE-A1-102008 040 494
- DE-A1-102009 013 945
- US-A1- 2009 105 040
- US-A1- 2012 242 199

## Beschreibung

Die Erfindung betrifft eine Antriebseinrichtung für ein Kraftfahrzeug, mit einem eine erste Antriebswelle aufweisenden ersten Antriebsaggregat, mit wenigstens einem eine zweite Antriebswelle aufweisenden zweiten Antriebsaggregat sowie mit einem Mehrganggetriebe, wobei das erste Antriebsaggregat über einen Schwingungsdämpfer und eine Schaltkupplung mit dem Mehrganggetriebe wirkverbunden ist, wobei die Schaltkupplung einen mit einer Eingangswelle des Mehrganggetriebes gekoppelten ersten Kupplungsteil und einen über den Schwingungsdämpfer mit dem ersten Antriebsaggregat gekoppelten zweiten Kupplungsteil aufweist, und wobei das erste Antriebsaggregat und das wenigstens eine zweite Antriebsaggregat achsparallel zueinander angeordnet sind, wobei das wenigstens eine zweite Antriebsaggregat über zumindest eine Getriebestufe mit dem ersten Kupplungsteil gekoppelt ist, und wobei die Schaltkupplung in einem Getriebegehäuse des Mehrganggetriebes angeordnet ist.

Die Antriebseinrichtung dient dem Antreiben des Kraftfahrzeugs, insoweit also dem Bereitstellen eines auf das Antreiben des Kraftfahrzeugs gerichteten Drehmoments. Die Antriebseinrichtung verfügt über mehrere Antriebsaggregate, insbesondere das erste Antriebsaggregat und das zweite Antriebsaggregat. Das erste Antriebsaggregat und das zweite Antriebsaggregat können unterschiedlichen Typs sein, also beispielsweise als Brennkraftmaschine und als elektrische Maschine vorliegen. In diesem Fall ist die Antriebseinrichtung als Hybridantriebseinrichtung ausgestaltet. Selbstverständlich können das erste Antriebsaggregat und das zweite Antriebsaggregat jedoch auch desselben Typs sein, also beide als Brennkraftmaschine oder als elektrische Maschine vorliegen. Beide Antriebsaggregate, also das erste Antriebsaggregat und das zweite Antriebsaggregat, weisen jeweils eine Antriebswelle auf, über welche sie das von ihnen erzeugte Drehmoment bereitstellen.

Aus dem Stand der Technik ist insbesondere die Druckschrift DE 199 41 705 A1 bekannt, die verschiedene Anordnungen eines Hybridantriebsstrangs beschreibt. Zudem ist die Druckschrift US 2012/024219 A1 bekannt, welche eine Kraftfahrzeugantriebseinrichtung betrifft. Weiterhin beschreibt die Druckschrift US 2009/0105040 A1 eine Hybridantriebseinrichtung, die Druckschrift DE 10 2009 013 945 A1 einen Antriebsstrang für ein Hybridfahrzeug, die Druckschrift EP 2 886 383 A2 einen Hybridantriebsstrang für ein Kraftfahrzeug und die Druckschrift DE 10 2008 040 494 A1 ein Hybridgetriebe eines Hybridantriebsstrangs eines Kraftfahrzeugs. Die Druckschrift US2012/242199 A1 offenbart ebenfalls einen Hybridantriebsstrang.

Es ist nun Aufgabe der Erfindung, eine Antriebseinrichtung für ein Kraftfahrzeug vorzuschlagen, welche gegenüber bekannten Antriebseinrichtungen Vorteile aufweist, insbesondere kompakt und platzsparend ausgebildet ist.

Dies wird erfindungsgemäß mit einer Antriebseinrichtung mit den Merkmalen des Anspruchs 1 erreicht. Dabei ist vorgesehen, dass der erste Kupplungsteil über eine Hohlwelle mit dem zweiten Antriebsaggregat gekoppelt ist, in der eine den Schwingungsdämpfer mit dem ersten Kupplungsteil verbindende und die Hohlwelle in axialer Richtung vollständig durchgreifende Koppelwelle angeordnet ist, wobei sich die Hohlwelle ausgehend von dem ersten Kupplungsteil in axialer Richtung in Richtung des ersten Antriebsaggregats erstreckt und an der Hohlwelle außerhalb des Getriebegehäuses ein Zahnrad angeordnet oder ausgebildet ist, das einen Teil der Getriebestufe bildet.

Erfindungsgemäß ist vorgesehen, dass die Schaltkupplung einen mit einer Eingangswelle des Mehrganggetriebes gekoppelten ersten Kupplungsteil und einen über den Schwingungsdämpfer mit dem ersten Antriebsaggregat gekoppelten zweiten Kupplungsteil aufweist, und dass das erste Antriebsaggregat und das wenigstens eine zweite Antriebsaggregat achsparallel zueinander angeordnet sind, wobei das wenigstens eine zweite Antriebsaggregat über zumindest eine Getriebestufe mit dem ersten Kupplungsteil gekoppelt ist.

Die Antriebseinrichtung verfügt über das Mehrganggetriebe, welches das Einstellen unterschiedlicher Übersetzungen ermöglicht. Das Mehrganggetriebe kann beispielsweise als Schaltgetriebe oder als Automatikgetriebe ausgestaltet sein. Unter dem Schaltgetriebe ist bevorzugt ein Handschaltgetriebe oder ein zumindest teilweise automatisiertes Schaltgetriebe, beispielsweise ein Doppelkupplungsgetriebe, zu verstehen. Das Automatikgetriebe bezeichnet bevorzugt ein Wandler-Automatikgetriebe. Selbstverständlich kann das Mehrganggetriebe jedoch auch als stufenloses Getriebe oder dergleichen ausgestaltet sein.

Das Mehrganggetriebe ist bevorzugt in einer Wirkverbindung zwischen dem ersten Antriebsaggregat und/oder dem zweiten Antriebsaggregat einerseits und einer Abtriebswelle der Antriebseinrichtung andererseits angeordnet. Mithin ist mithilfe des Mehrganggetriebes die Übersetzung zwischen der ersten Antriebswelle und/oder der zweiten Antriebswelle einerseits und der Abtriebswelle der Antriebseinrichtung andererseits einstellbar.

Das erste Antriebsaggregat ist über den Schwingungsdämpfer und die Schaltkupplung mit dem Mehrganggetriebe wirkverbunden. Der Schwingungsdämpfer kann auch als Drehschwingungsdämpfer oder als Torsionskupplung bezeichnet werden. Er dient der Dämpfung von Schwingungen beziehungsweise Drehschwingungen des ersten Antriebsaggregats, damit diese nicht oder allenfalls in gedämpfter Form auf das Mehrganggetriebe übertragen werden.

Weiterhin verfügt die Antriebseinrichtung über die Schaltkupplung. Mittels dieser ist die Wirkverbindung zwischen dem ersten Antriebsaggregat und dem Mehrganggetriebe herstellbar beziehungsweise unterbrechbar. Das bedeutet, dass in einem ersten Schaltzustand der Schaltkupplung die Wirkverbindung zwischen dem ersten Antriebsaggregat und dem Mehrganggetriebe unterbrochen ist, während sie in einem zweiten Schaltzustand zumindest teilweise, insbesondere vollständig, hergestellt ist. In dem zweiten Schaltzustand ist das erste Antriebsaggregat beziehungsweise dessen Antriebswelle vorzugsweise mit dem Mehrganggetriebe wirkverbunden.

Der Schwingungsdämpfer ist zwischen dem ersten Antriebsaggregat und der Schaltkupplung vorgesehen, die Schaltkupplung ist also über den Schwingungsdämpfer mit dem ersten Antriebsaggregat wirkverbunden.

Die Schaltkupplung ist mehrteilig aufgebaut und verfügt über wenigstens den ersten Kupplungsteil und den zweiten Kupplungsteil. In einem ersten Schaltzustand beziehungsweise einer ersten Schaltstellung der Schaltkupplung sind der erste Kupplungsteil und der zweite Kupplungsteil voneinander entkoppelt, sodass die Schaltkupplung geöffnet ist und kein Drehmoment zwischen dem ersten Antriebsaggregat und dem Mehrganggetriebe übertragen wird. In einem zweiten Schaltzustand beziehungsweise einer zweiten Schaltstellung liegt dagegen eine Wirkverbindung zwischen dem ersten Kupplungsteil und dem zweiten Kupplungsteil vor, sodass Drehmoment zwischen dem ersten Antriebsaggregat und dem Mehrganggetriebe übertragen wird, zumindest ein Teil des Drehmoments. Bevorzugt sind in dem zweiten Schaltzustand der zweite Kupplungsteil und der erste Kupplungsteil drehfest miteinander verbunden, zumindest für ein zwischen dem ersten Antriebsaggregat und dem Mehrganggetriebe wirkenden Drehmoment, das innerhalb eines üblichen Drehmomentbereichs der Antriebseinrichtung liegt.

Der erste Kupplungsteil der Schaltkupplung ist unmittelbar mit der Eingangswelle des Mehrganggetriebes gekoppelt. Beispielsweise ist der erste Kupplungsteil unmittelbar auf der Eingangswelle des Mehrganggetriebes angeordnet und mit dieser verbunden. Der zweite Kupplungsteil der Schaltkupplung ist dagegen über den Schwingungsdämpfer mit dem ersten Antriebsaggregat beziehungsweise dessen Antriebswelle gekoppelt.

Die Schaltkupplung ist beispielsweise als Lamellenkupplung ausgestaltet. Hierbei verfügt sie über Lamellen, welche ausgehend von dem zweiten Kupplungsteil in radialer Richtung bezüglich einer Drehachse des zweiten Kupplungsteils nach außen ragen und dabei zwischen Lamellen eingreifen, die an dem ersten Kupplungsteil angeordnet sind und sich ausgehend von diesem in radialer Richtung nach innen erstrecken. Die Lamellen des zweiten Kupplungsteils und des ersten Kupplungsteils greifen in radialer Richtung gesehen zwischeneinander ein. In axialer Richtung gesehen liegen hierzu der zweite Kupplungsteil und der erste Kupplungsteil wenigstens teilweise in Überdeckung vor. Beispielsweise greift der zweite Kupplungsteil in den ersten Kupplungsteil ein. Der erste Kupplungsteil kann auch als Außenträger und der zweite Kupplungsteil als Innenträger bezeichnet werden.

In dem ersten Schaltzustand der Schaltkupplung liegen die Lamellen des ersten Kupplungsteils und des zweiten Kupplungsteils voneinander beabstandet vor, insbesondere in axialer Richtung voneinander beabstandet, sodass der erste Kupplungsteil und der zweite Kupplungsteil voneinander entkoppelt sind. In dem zweiten Schaltzustand liegen die Lamellen des ersten Kupplungsteils jedoch an den Lamellen des zweiten Kupplungsteils an, sodass eine kraftschlüssige Wirkverbindung zwischen dem ersten Kupplungsteil und dem zweiten Kupplungsteil hergestellt ist. Beispielsweise ist der erste Kupplungsteil in axialer Richtung verlagerbar, um die Lamellen in dem ersten Schaltzustand voneinander zu beabstanden und in dem zweiten Schaltzustand miteinander in Wirkverbindung zu setzen.

Selbstverständlich kann die Schaltkupplung jedoch grundsätzlich beliebig ausgestaltet sein, insbesondere als kraftschlüssige oder als formschlüssige Schaltkupplung vorliegen. Ein Beispiel für eine kraftschlüssige Schaltkupplung ist die vorstehend bereits erwähnte Lamellenkupplung. Ist die Lamellenkupplung formschlüssig, so liegt sie beispielsweise als Klauenkupplung vor. Die Schaltkupplung muss nicht notwendigerweise bedienbar beziehungsweise betätigbar sein, es kann auch ein automatisches Schalten vorgesehen sein. Die Schaltkupplung zeichnet sich jedoch dadurch aus, dass sie in den wenigstens zwei Schaltzuständen beziehungsweise Schaltstellungen vorliegen kann. Insoweit kann also die Schaltkupplung als Überholkupplung beziehungsweise Freilauf ausgestaltet sein, bei welcher/welchem der Schaltzustand von der Relativdrehzahl zwischen den Kupplungsteilen beziehungsweise den Drehrichtungen des ersten Kupplungsteils und des zweiten Kupplungsteils abhängt.

Weiterhin ist es vorgesehen, dass das erste Antriebsaggregat und das wenigstens eine zweite Antriebsaggregat achsparallel zueinander angeordnet sind. Das bedeutet, dass die Antriebswelle des ersten Antriebsaggregats beziehungsweise ihre Drehachse parallel zu der Antriebswelle des zweiten Antriebsaggregats beziehungsweise ihrer Drehachse angeordnet ist. Durch eine derartige Anordnung des ersten Antriebsaggregats und des wenigstens einen zweiten Antriebsaggregats kann der Bauraum in einem Motorraum, in welchem die Antriebseinrichtung angeordnet ist, optimal ausgenutzt werden. Zudem wird die Anbindung der Antriebsaggregate an weitere Komponenten der Antriebseinrichtung, insbesondere an das Mehrganggetriebe, vereinfacht.

Bei der achsparallelen Anordnung ist eine parallel beabstandete Anordnung der Antriebswellen beziehungsweise ihrer Drehachsen vorgesehen.

Es kann vorgesehen sein, dass das erste Antriebsaggregat und das zweite Antriebsaggregat nebeneinander angeordnet sind. Das bedeutet mit Hinblick auf ihre Antriebswellen beziehungsweise deren Drehachsen, dass die Antriebsaggregate in axialer Richtung in Überdeckung vorliegen. Das erste Antriebsaggregat und das zweite Antriebsaggregat sollen also gerade nicht in axialer Richtung voneinander beabstandet, sondern vielmehr an wenigstens einer Axialposition nebeneinander angeordnet sein. Besonders bevorzugt liegt das in axialer Richtung kleinere der Antriebsaggregate, also entweder das erste Antriebsaggregat oder das zweite Antriebsaggregat, vollständig in Überdeckung mit dem in axialer Richtung größeren der Antriebsaggregate vor. Beispielsweise ist das zweite Antriebsaggregat in axialer Richtung kleiner als das erste Antriebsaggregat.

Bevorzugt ist es vorgesehen, dass das erste Antriebsaggregat und das zweite Antriebsaggregat bei einer bestimmten Drehrichtung der Eingangswelle dieselbe Drehrichtung aufweisen. Hierzu ist kann die Getriebestufe entsprechend ausgestaltet sein. Die Getriebestufe ist insoweit drehrichtungserhaltend ausgestaltet und verfügt zu diesem Zweck beispielsweise über eine ungerade Anzahl an Zahnrädern, also mindestens drei Zahnräder.

Es ist vorgesehen, dass die Schaltkupplung in einem Getriebegehäuse des Mehrganggetriebes angeordnet ist. Auf diese Art und Weise wird ein besonders hoher Integrationsgrad und insoweit ein geringer Bauraumbedarf der Antriebseinrichtung erzielt. Das Getriebegehäuse dient insbesondere der Aufnahme von Getriebeelementen des Mehrganggetriebes, also beispielsweise wenigstens eines Zahnradsatzes beziehungsweise eines Planetenradsatzes. Die Schaltkupplung ist nun ebenfalls in diesem Getriebegehäuse angeordnet, sodass die Schaltkupplung in das Mehrganggetriebe integriert ist.

Gemäß der Erfindung ist vorgesehen, dass der erste Kupplungsteil über eine Hohlwelle mit dem zweiten Antriebsaggregat gekoppelt ist, der eine den Schwingungsdämpfer mit dem zweiten Kupplungsteil verbindende Koppelwelle angeordnet ist. Über die Hohlwelle liegt die Wirkverbindung zwischen dem ersten Kupplungsteil und dem zweiten Antriebsaggregat vor. Die Hohlwelle erstreckt sich ausgehend von dem ersten Kupplungsteil in axialer Richtung in Richtung des ersten Antriebsaggregats.

Zusätzlich erstreckt sich die Hohlwelle ausgehend von dem ersten Kupplungsteil in die von dem Mehrganggetriebe abgewandte Richtung. Die Hohlwelle dient der Aufnahme wenigstens eines Teils der Koppelwelle. Über die Koppelwelle ist der Schwingungsdämpfer mit dem zweiten Kupplungsteil wirkverbunden, insbesondere starr und/oder permanent. Die Koppelwelle durchgreift die Hohlwelle in axialer Richtung vollständig.

Eine weitere Ausgestaltung der Erfindung sieht vor, dass die Eingangswelle einerseits und die erste Antriebswelle und/oder die Hohlwelle und die Koppelwelle andererseits koaxial angeordnet sind.

Eine bevorzugte Ausgestaltung der Erfindung sieht vor, dass die Koppelwelle über wenigstens ein Lager an der Hohlwelle gelagert ist. Das Lager liegt insoweit zwischen der Koppelwelle und der Hohlwelle vor. Besonders bevorzugt ist die Koppelwelle mittels des Lagers in der Hohlwelle gelagert. Dies bedeutet, dass das Lager in radialer Richtung gesehen innen an der Koppelwelle beziehungsweise an einem Außenumfang der Koppelwelle und in radialer Richtung außen an der Hohlwelle beziehungsweise einem Innenumfang der Hohlwelle anliegt. Besonders bevorzugt sind mehrere derartige Lager vorgesehen, die in axialer Richtung voneinander beabstandet angeordnet sind.

Weiterhin sieht die Erfindung vor, dass an der Hohlwelle ein Zahnrad angeordnet oder ausgebildet ist, das einen Teil der Getriebestufe bildet. Das Zahnrad kann Bestandteil der Hohlwelle sein und insoweit einstückig und/oder materialeinheitlich mit dieser vorliegen. Alternativ ist das Zahnrad separat von der Hohlwelle ausgebildet und an der Hohlwelle befestigt. Das Zahnrad bildet einen Teil der Getriebestufe, sodass also das zweite Antriebsaggregat über die Hohlwelle mit dem ersten Kupplungsteil und über diesen wiederum mit dem Mehrganggetriebe wirkverbunden ist.

Zudem sieht die Erfindung vor, dass das Zahnrad außerhalb des Getriebegehäuses angeordnet ist. Vorstehend wurde bereits erläutert, dass die Schaltkupplung erfindungsgemäß in dem Getriebegehäuse vorliegt.

Entsprechend erstreckt sich die Hohlwelle aus dem Getriebegehäuse heraus, sodass das Zahnrad außerhalb des Getriebegehäuses vorliegt. Auf diese Art und Weise wird eine zuverlässige Kapselung des Mehrganggetriebes realisiert.

Im Rahmen einer weiteren Ausgestaltung der Erfindung ist vorgesehen, dass der erste Kupplungsteil zur Aktuierung der Schaltkupplung axial verlagerbar ist. Dies ist insbesondere der Fall, falls die Schaltkupplung als Lamellenkupplung vorliegt. In dem ersten Schaltzustand der Schaltkupplung ist der ersten Kupplungsteil insoweit in einer ersten Axialposition und in einer zweiten Schaltung in einer zweiten Axialposition angeordnet. Die Hohlwelle kann zusammen mit dem ersten Kupplungsteil in axialer Richtung verlagert werden beziehungsweise verlagerbar angeordnet sein. Hierzu ist bevorzugt die Getriebestufe derart ausgebildet, dass ein aufgrund des Verlagerns auftretender Versatz der Hohlwelle in axialer Richtung ausgeglichen wird. Insbesondere weisen die Zahnräder der Getriebestufe eine Breite auf, die gewährleistet, dass sie in jeder Stellung des ersten Kupplungsteils miteinander in Eingriff stehen.

Schließlich kann in einer weiteren Ausführungsform der Erfindung vorgesehen sein, dass das erste Antriebsaggregat als Brennkraftmaschine und/oder das zweite Antriebsaggregat als elektrische Maschine vorliegt. Auf eine derartige Ausgestaltung der insoweit als Hybridantriebseinrichtung ausgestalteten Antriebseinrichtung wurde vorstehend bereits hingewiesen.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Darstellung einer Antriebseinrichtung in einer erfindungsgemäßen Ausführungsform, und
- Figur 2: ein nicht erfindungsgemäßes Beispiel einer Antriebseinrichtung.

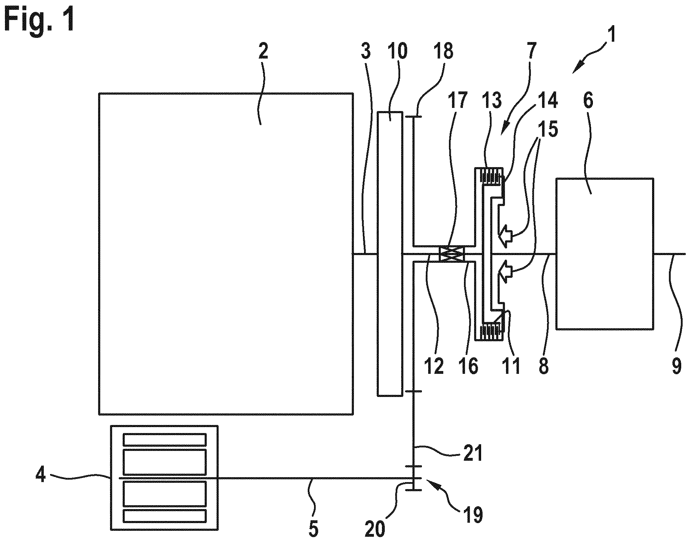

Die Figur 1 zeigt eine schematische Darstellung einer Antriebseinrichtung 1, die beispielswiese zum Antreiben eines Kraftfahrzeugs verwendet werden kann. Die Antriebseinrichtung 1 verfügt über ein erstes Antriebsaggregat 2 mit einer ersten Antriebswelle 3 und über ein zweites Antriebsaggregat 4 mit einer zweiten Antriebswelle 5. Das erste Antriebsaggregat 2 ist als Brennkraftmaschine und das zweite Antriebsaggregat 4 als elektrische Maschine ausgestaltet. Das zweite Antriebsaggregat 4 ist achsparallel zu dem ersten Antriebsaggregat 2 angeordnet, insbesondere neben diesem. Darunter ist zu verstehen, dass die Antriebsaggregate 2 und 4 in axialer Richtung bezüglich ihrer Antriebswellen 3 und 5 in zumindest teilweiser Überdeckung, insbesondere in vollständiger Überdeckung, miteinander vorliegen

Die Antriebseinrichtung 1 verfügt weiterhin über ein Mehrganggetriebe 6 sowie eine Schaltkupplung 7. Das Mehrganggetriebe 6 verfügt über eine Eingangswelle 8 und eine Ausgangswelle 9. Die Übersetzung zwischen der Eingangswelle 8 und der Ausgangswelle 9 ist mithilfe des Mehrganggetriebes 6 auf unterschiedliche Übersetzungen einstellbar.

Die Antriebswelle 3 ist auf ihrer dem ersten Antriebsaggregat 2 abgewandten Seite mit einem Schwingungsdämpfer 10 auf dessen Eingangsseite verbunden. Auf seiner dem ersten Antriebsaggregat 2 beziehungsweise der ersten Antriebswelle 3 abgewandten Seite, also ausgangsseitig, ist der Schwingungsdämpfer 10 mit einem Innenträger 11 der Schaltkupplung 7 wirkverbunden, insbesondere starr und/oder permanent. Der Innenträger 11 kann auch als zweiter Kupplungsteil 11 bezeichnet werden. Die Wirkverbindung zwischen dem Schwingungsdämpfer 10 und dem Innenträger 11 ist beispielsweise über eine Koppelwelle 12 vorgesehen.

Ein Außenträger 13 der Schaltkupplung 7, der auch als erster Kupplungsteil 13 bezeichnet werden kann, ist mit dem Mehrganggetriebe 6 beziehungsweise dessen Eingangswelle 8 wirkverbunden, insbesondere starr und/oder permanent. Die Schaltkupplung 7 ist bevorzugt als Lamellenkupplung ausgestaltet, weist also von dem Innenträger 11 und dem Außenträger 13 ausgehende Lamellen auf, welche zwischeneinander eingreifen. Beispielsweise durch eine axiale Verlagerung des Außenträgers 13 mittels eines Aktuators 14 kann die Schaltkupplung 7 geschlossen werden, sodass die Lamellen kraftschlüssig zusammenwirken und eine Wirkverbindung zwischen dem Innenträger 11 und dem Außenträger 13 hergestellt ist. Die Verlagerung des Außenträgers 13 ist durch die Pfeile 15 angedeutet. Es ist deutlich zu erkennen, dass die Eingangswelle 8 koaxial zu der Koppelwelle 12 und der ersten Antriebswelle 3 angeordnet ist. Insbesondere ist in axialer Richtung die Schaltkupplung 7 zwischen dem ersten Antriebsaggregat 2 und dem Mehrganggetriebe 6 angeordnet.

In der hier dargestellten ersten Ausführungsform ist eine mit dem Außenträger 13 verbundene Hohlwelle 16 vorgesehen, wobei die Wirkverbindung bevorzugt starr und/oder permanent ist. In der Hohlwelle 16 ist die Koppelwelle 12 angeordnet. Erfindungsgemäß durchgreift die Koppelwelle 12 die Hohlwelle 16 in axialer Richtung vollständig. Zudem kann es vorgesehen sein, dass die Koppelwelle 12 in beziehungsweise an der Hohlwelle 16 gelagert ist. Zu diesem Zweck ist ein Lager 17 vorgesehen, das in radialer Richtung innen an einem Außenumfang der Koppelwelle 12 und außen an einem Innenumfang der Hohlwelle 16 anliegt und mithin die Koppelwelle 12 in radialer Richtung bezüglich der Hohlwelle 16 lagert.

An der Hohlwelle 16 ist ein Zahnrad 18 angeordnet beziehungsweise befestigt, das einen Teil einer Getriebestufe 19 bildet. Über die Getriebestufe 19 ist das zweite Antriebsaggregat 4 mit dem Außenträger 13 und über diesen mit dem Mehrganggetriebe 6 beziehungsweise dessen Eingangswelle 8 wirkverbunden, insbesondere starr und/oder permanent. Die Getriebestufe 19 weist dabei ein Zahnrad 20 auf, das mit der Antriebswelle 5 verbunden ist, insbesondere auf dieser angeordnet ist. Die Zahnräder 18 und 20 sind über ein Zwischenrad 21 miteinander wirkverbunden, das einerseits mit dem Zahnrad 20 und andererseits mit dem Zahnrad 18 kämmt.

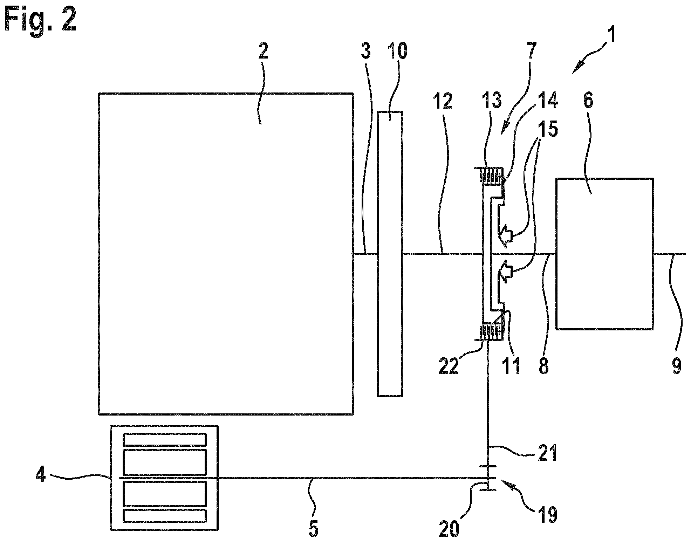

Die Figur 2 zeigt ein nicht erfindungsgemäßes Beispiel einer Antriebseinrichtung. Diese ist grundsätzlich ähnlich zu der erfindungsgemäßen Ausführungsform ausgestaltet, sodass auf die vorstehenden Ausführungen verwiesen und nachfolgend lediglich auf die Unterschiede eingegangen wird. Diese liegen darin, dass die Hohlwelle 16, das Lager 17 und das Zahnrad 18 nicht vorgesehen sind. Vielmehr verfügt der Außenträger 13 über eine Außenverzahnung 22, die einen Teil der Getriebestufe 19 bildet. Zu diesem Zweck kämmt das Zwischenrad 21 einerseits mit dem Zahnrad 20 und andererseits mit der Außenverzahnung 22, sodass über die Getriebestufe 19 eine Wirkverbindung zwischen dem zweiten Antriebsaggregat 4 und dem Außenträger 13 und mithin mit dem Mehrganggetriebe 6 hergestellt ist. Eine derartige nicht erfindungsgemäße Lösung ermöglicht eine weitere Reduktion des Bauraumbedarfs der Antriebseinrichtung 1.

Beide Antriebseinrichtungen zeichnen sich durch eine kompakte Bauform und mithin einen geringen Bauraumbedarf aus. Dies wird insbesondere ermöglicht durch die achsparallele Anordnung des ersten Antriebsaggregats 2 und des zweiten Antriebsaggregats 4, sodass beide Antriebsaggregate 2 und 4 ohne weiteres mit dem Mehrganggetriebe 6 wirkverbindbar sind. Die Wirkverbindung zwischen dem ersten Antriebsaggregat 2 und dem Mehrganggetriebe 6 ist über die Schaltkupplung 7 vorgesehen. Sie kann entsprechend wahlweise unterbrochen oder hergestellt werden. Insbesondere ist das erste Antriebsaggregat 2 in einem ersten Schaltzustand der Schaltkupplung 7 von dem Mehrganggetriebe 6 entkoppelt, während in einem zweiten Schaltzustand die Wirkverbindung zwischen dem ersten Antriebsaggregat 2 und dem Mehrganggetriebe 6 vorliegt. Das zweite Antriebsaggregat 4 ist dagegen permanent mit dem Mehrganggetriebe 6 wirkverbunden.

## Patentansprüche

1. Antriebseinrichtung (1) für ein Kraftfahrzeug, mit einem eine erste Antriebswelle (3) aufweisenden ersten Antriebsaggregat (2), mit wenigstens einem eine zweite Antriebswelle (5) aufweisenden zweiten Antriebsaggregat (4) sowie mit einem Mehrganggetriebe (6), wobei das erste Antriebsaggregat (2) über einen Schwingungsdämpfer (10) und eine Schaltkupplung (7) mit dem Mehrganggetriebe (6) wirkverbunden ist, wobei die Schaltkupplung (7) einen mit einer Eingangswelle (8) des Mehrganggetriebes (6) gekoppelten ersten Kupplungsteil (13) und einen über den Schwingungsdämpfer (10) mit dem ersten Antriebsaggregat (2) gekoppelten zweiten Kupplungsteil (11) aufweist, und wobei das erste Antriebsaggregat (2) und das wenigstens eine zweite Antriebsaggregat (4) achsparallel zueinander angeordnet sind, wobei das wenigstens eine zweite Antriebsaggregat (4) über zumindest eine Getriebestufe (19) mit dem ersten Kupplungsteil (13) gekoppelt ist, und wobei die Schaltkupplung (7) in einem Getriebegehäuse des Mehrganggetriebes (6) angeordnet ist, wobei der erste Kupplungsteil (13) über eine Hohlwelle (16) mit dem zweiten Antriebsaggregat (4) gekoppelt ist, in der eine den Schwingungsdämpfer (10) mit dem zweiten Kupplungsteil (11) verbindende Koppelwelle (12) angeordnet ist, und wobei an der Hohlwelle (16) außerhalb des Getriebegehäuses ein Zahnrad (18) angeordnet oder ausgebildet ist,
**dadurch gekennzeichnet, dass** die Koppelwelle (12) die Hohlwelle (16) in axialer Richtung vollständig durchgreift, und dass sich die Hohlwelle (16) ausgehend von dem ersten Kupplungsteil (13) in axialer Richtung in Richtung des ersten Antriebsaggregats (2) erstreckt.

2. Antriebseinrichtung nach Anspruch 1, **dadurch gekennzeichnet, dass** die Eingangswelle (8) einerseits und die erste Antriebswelle (3) und/oder die Hohlwelle (16) und die Koppelwelle (12) andererseits koaxial angeordnet sind.

3. Antriebseinrichtung nach einem der vorhergehenden Ansprüche, **dadurch gekennzeichnet, dass** die Koppelwelle (12) über wenigstens ein Lager (17) an der Hohlwelle (16) gelagert ist.

4. Antriebseinrichtung nach einem der vorhergehenden Ansprüche, **dadurch gekennzeichnet, dass** der erste Kupplungsteil (13) zur Aktuierung der Schaltkupplung (7) axial verlagerbar ist.

5. Antriebseinrichtung nach einem der vorhergehenden Ansprüche, **dadurch gekennzeichnet, dass** das erste Antriebsaggregat (2) als Brennkraftmaschine und/oder das zweite Antriebsaggregat (4) als elektrische Maschine vorliegt.

## Claims

1. Drive device (1) for a motor vehicle, having a first drive unit (2) which has a first drive shaft (3), having at least one second drive unit (4) which has a second drive shaft (5), and having a multi-speed gearbox (6), wherein the first drive unit (2) is operatively connected to the multi-speed gearbox (6) via a vibration damper (10) and a shift clutch (7), wherein the shift clutch (7) has a first clutch part (13) coupled to an input shaft (8) of the multi-speed gearbox (6) and a second clutch part (11) coupled to the first drive unit (2) via the vibration damper (10), and wherein the first drive unit (2) and the at least one second drive unit (4) are arranged axially parallel to one another, wherein the at least one second drive unit (4) is coupled to the first clutch part (13) via at least one gear stage (19), and wherein the shift clutch (7) is arranged in a gearbox housing of the multi-speed gearbox (6), wherein the first clutch part (13) is coupled to the second drive unit (4) via a hollow shaft (16) in which a coupling shaft (12) connecting the vibration damper (10) to the second clutch part (11) is arranged, and wherein a gearwheel (18) is arranged or formed on the hollow shaft (16) outside the gearbox housing,
**characterised in that** the coupling shaft (12) extends completely through the hollow shaft (16) in the axial direction, and **in that** the hollow shaft (16) extends from the first coupling part (13) in the axial direction in the direction of the first drive unit (2).

2. Drive device according to claim 1, **characterised in that** the input shaft (8) on the one hand and the first drive shaft (3) and/or the hollow shaft (16) and the coupling shaft (12) on the other hand are arranged coaxially.

3. Drive device according to any one of the preceding claims, **characterised in that** the coupling shaft (12) is supported on the hollow shaft (16) by at least one bearing (17).

4. Drive device according to any one of the preceding claims, **characterised in that** the first clutch part (13) is axially displaceable so as to actuate the clutch (7).

5. Drive device according to any one of the preceding claims, **characterised in that** the first drive unit (2) is in the form of an internal combustion engine and/or the second drive unit (4) is in the form of an electric machine.

## Revendications

1. Équipement d'entraînement (1) pour un véhicule à moteur, avec un premier agrégat d'entraînement (2) présentant un premier arbre d'entraînement (3), avec au moins un deuxième agrégat d'entraînement (4) présentant un deuxième arbre d'entraînement (5) ainsi qu'avec une boîte de vitesses à plusieurs rapports (6), dans lequel le premier agrégat d'entraînement (2) est relié fonctionnellement à la boîte de vitesses à plusieurs rapports (6) via un amortisseur de vibrations (10) et un embrayage (7), dans lequel l'embrayage (7) présente un premier élément de couplage (13) couplé à un arbre d'entrée (8) de la boîte de vitesses à plusieurs rapports (6) et un second élément de couplage (11) couplé au premier agrégat d'entraînement (2) via l'amortisseur de vibrations (10) et dans lequel le premier agrégat d'entraînement (2) et l'au moins un deuxième agrégat d'entraînement (4) sont disposés l'un par rapport à l'autre parallèlement à l'axe, dans lequel l'au moins un deuxième agrégat d'entraînement (4) est couplé au premier élément de couplage (13) via au moins un étage de transmission (19), et dans lequel l'embrayage (7) est disposé dans un carter de transmission de la boîte de vitesses à plusieurs rapports (6), dans lequel le premier élément de couplage (13) est couplé via un arbre creux (16) au deuxième agrégat d'entraînement (4), dans lequel est disposé un arbre de couplage (12) reliant l'amortisseur de vibrations (10) et le second élément de couplage (11), et dans lequel au niveau de l'arbre creux (16) à l'extérieur du carter de transmission une roue dentée (18) est disposée ou configurée,
**caractérisé en ce que** l'arbre de couplage (12) se met totalement en prise dans la direction axiale avec l'arbre creux (16) et **en ce que** l'arbre creux (16) s'étend dans la direction axiale dans la direction du premier agrégat d'entraînement (2) à partir du premier élément de couplage (13).

2. Équipement d'entraînement selon la revendication 1, **caractérisé**en ce que l'arbre d'entrée (8) d'une part et le premier arbre d'entraînement (3) et/ou l'arbre creux (16) et l'arbre de couplage (12) d'autre part sont disposés coaxialement.

3. Équipement d'entraînement selon l'une quelconque des revendications précédentes, **caractérisé**en ce que l'arbre de couplage (12) est monté au niveau de l'arbre creux (16) via au moins un palier (17).

4. Équipement d'entraînement selon l'une quelconque des revendications précédentes, **caractérisé en ce que** le premier élément de couplage (13) peut être déplacé axialement pour l'actionnement de l'embrayage (7).

5. Équipement d'entraînement selon l'une quelconque des revendications précédentes, **caractérisé en ce que** le premier agrégat d'entraînement (2) est présent en tant que moteur à combustion interne et/ou le deuxième agrégat d'entraînement (4) est présent en tant que moteur électrique
